# FASCICULE DE BREVET EUROPEEN

(11) **EP 3 408 222 B1**
(45) Date de publication et mention de la délivrance du brevet: **14.07.2021**
(21) Numéro de dépôt: 17706562.0
(22) Date de dépôt: 24.01.2017
(51) Int. Cl.: C01B 3/04, B01J 7/00

(54) **SYSTEME ET PROCEDE DE GENERATION D'HYDROGENE GAZEUX**
SYSTEM UND VERFAHREN ZUR ERZEUGUNG VON WASSERSTOFFGAS
SYSTEM AND PROCESS FOR GENERATING HYDROGEN GAS

(30) Priorité: 26.01.2016 FR 1650584
(43) Date de publication de la demande: 05.12.2018
(73) Titulaire: ARIANEGROUP SAS, 75015 Paris (FR)
(72) Inventeur: FOURNET, Arnaud, 97310 Kourou (FR); FOURNIER, Jean-Jacques, 91610 Ballancourt-sur-Essonne (FR)
(74) Mandataire: Cabinet Beau de Loménie
(86) Numéro de dépôt international: PCT/FR2017/050145
(87) Numéro de publication internationale: WO 2017/129889

(56) Documents cités:
- FR-A1- 2 011 354
- FR-A1- 2 957 911
- GB-A- 2 164 637
- GB-A- 2 470 267
- US-A1- 2011 033 342
- US-A1- 2011 207 027

## Description

### Arrière-plan de l'invention

L'invention concerne un système de production d'hydrogène gazeux. Plus précisément, l'invention porte sur un système de génération d'hydrogène gazeux de type « multi-pulse à accumulation », c'est-à-dire un système apte à générer de l'hydrogène gazeux à partir d'une pluralité de chargements unitaires qui sont initiés successivement en fonction de la quantité d'hydrogène gazeux nécessaire, l'hydrogène gazeux produit étant stocké dans le système et délivré sur demande à un ou plusieurs équipements reliés au système, comme par exemple une pile à combustible.

Les documents US 2011/0033342 et FR 2 957 911 décrivent des systèmes de production d'hydrogène gazeux comprenant une pluralité de cartouches renfermant chacune un matériau apte à générer de l'hydrogène gazeux et pouvant être initiées sur commande afin de contrôler la quantité d'hydrogène gazeux produit. US 2011/033342 et GB 2 470 267 montrent également des systèmes de production d'hydrogène gazeux comprenant une pluralité de cartouches.

Cependant, dans les systèmes divulgués dans ces documents, la décomposition thermique du matériau apte à générer de l'hydrogène gazeux n'est pas toujours optimale, notamment en termes de débit d'hydrogène gazeux produit par chaque cartouche.

Or, il existe un besoin pour un système de production d'hydrogène gazeux permettant un meilleur contrôle du débit.

### Objet et résumé de l'invention

A cet effet, la présente invention propose un système de production d'hydrogène gazeux comprenant une enceinte formée d'une paroi latérale, d'un fond avant et d'un fond arrière, ladite enceinte refermant un ou plusieurs chargements unitaires d'au moins un matériau apte à générer de l'hydrogène gazeux sous sollicitation thermique, caractérisé en ce que chaque chargement unitaire comprend un corps cylindrique comprenant un fond arrière fermé et un fond avant comportant une ouverture, au moins un bloc d'un matériau apte à générer de l'hydrogène gazeux sous sollicitation thermique étant présent à l'intérieur du corps cylindrique, chaque bloc présentant une forme annulaire définissant un canal central débouchant au niveau de l'ouverture du fond avant du corps cylindrique et au moins un initiateur présent au voisinage du fond arrière du corps cylindrique.

Le système de production d'hydrogène de l'invention est notamment avantageux en ce qu'il permet une décomposition thermique optimale du matériau de génération d'hydrogène gazeux dans chaque chargement unitaire. En effet, grâce à la présence, dans chaque chargement unitaire, d'un canal central dans le ou les blocs de matériau générateur d'hydrogène et d'un initiateur au voisinage du fond arrière du corps cylindrique, il est possible, par la circulation des gaz chauds, d'initier, puis d'entretenir, une décomposition thermique radiale du ou des blocs de matériau générateur d'hydrogène permettant d'assurer une décomposition thermique totale et accélérée du matériau présent dans le chargement unitaire. On améliore ainsi le débit d'hydrogène gazeux produit par chaque chargement unitaire du système de génération d'hydrogène en obtenant un débit plus élevé et régulier tout au long de la décomposition thermique du matériau générateur d'hydrogène dans chaque chargement unitaire.

Selon un mode de réalisation du système de production d'hydrogène gazeux de l'invention, chaque chargement unitaire comprend une pluralité de segments d'un matériau apte à générer de l'hydrogène gazeux sous sollicitation thermique, chaque segment présentant une forme annulaire avec une ouverture centrale, les segments étant empilés les uns sur les autres dans le corps cylindrique de manière à délimiter entre eux un canal central pour l'évacuation de l'hydrogène gazeux.

Selon une caractéristique particulière du système de production d'hydrogène gazeux de l'invention, l'ouverture du fond avant du corps cylindrique de chaque chargement unitaire débouche dans un volume collecteur de l'enceinte qui est apte à échanger thermiquement avec le fond avant de l'enceinte. Cela permet de dissiper une partie significative de la chaleur transportée par les gaz chauds en sortie de chargement unitaire.

Selon une autre caractéristique particulière du système de production d'hydrogène gazeux de l'invention, celui-ci comprend une capacité d'accumulation d'hydrogène gazeux présente du côté du fond arrière de l'enceinte et en ce qu'un circuit de circulation de gaz s'étend entre le volume collecteur et la capacité d'accumulation, le circuit de circulation étant apte à échanger thermiquement avec la paroi latérale de l'enceinte. Cela contribue également à dissiper la chaleur transportée par les gaz chauds.

Selon encore une autre caractéristique particulière du système de production d'hydrogène gazeux de l'invention, celui-ci comprend une pluralités de chargements unitaires, les chargements unitaires étant maintenus espacés les uns des autres dans l'enceinte par un bloc de maintien en matériau isolant thermiquement. Ce maintien permet de réduire les risques d'une initiation non désirée du ou des chargements unitaires adjacents à un chargement volontairement initié tout en optimisant le taux de chargement des chargements unitaires dans le système.

L'invention a également pour objet un procédé de génération d'hydrogène gazeux dans un système de production d'hydrogène gazeux comprenant une enceinte formée d'une paroi latérale, d'un fond avant et d'un fond arrière, ladite enceinte refermant un ou plusieurs chargements unitaires d'au moins un matériau apte à générer de l'hydrogène gazeux sous sollicitation thermique, le procédé comprenant l'initiation successive de chaque chargement unitaire, caractérisé en ce que chaque chargement unitaire comprend un corps cylindrique comprenant un fond arrière fermé et un fond avant comportant une ouverture, au moins un bloc d'un matériau apte à générer de l'hydrogène gazeux sous sollicitation thermique étant présent à l'intérieur du corps cylindrique, chaque bloc présentant une forme annulaire définissant un canal central débouchant au niveau de l'ouverture du fond avant du corps cylindrique et au moins un initiateur présent au voisinage du fond arrière du corps cylindrique.

Selon un mode de réalisation du procédé de génération d'hydrogène gazeux de l'invention, chaque chargement comprend une pluralité de segments d'un matériau apte à générer de l'hydrogène gazeux sous sollicitation thermique, chaque segment présentant une forme annulaire avec une ouverture centrale, les segments étant empilés les uns sur les autres dans le corps cylindrique de manière à délimiter entre eux un canal central pour l'évacuation de l'hydrogène gazeux.

Selon une caractéristique particulière du procédé de génération d'hydrogène gazeux de l'invention, l'ouverture du fond avant du corps cylindrique de chaque chargement unitaire débouche dans un volume collecteur de l'enceinte qui est apte à échanger thermiquement avec le fond avant de l'enceinte. Cela permet de dissiper une partie significative de la chaleur transportée par les gaz chauds en sortie de chargement unitaire.

Selon une autre caractéristique particulière du procédé de génération d'hydrogène gazeux de l'invention, une capacité d'accumulation d'hydrogène gazeux est présente du côté du fond arrière de l'enceinte et en ce que l'hydrogène gazeux produit dans le volume collecteur par les chargements unitaires est acheminé jusqu'à la capacité d'accumulation en échangeant thermiquement avec la paroi latérale de l'enceinte. Cela contribue également à dissiper la chaleur transportée par les gaz chauds.

Selon encore une autre caractéristique particulière du procédé de génération d'hydrogène gazeux de l'invention, le système de production d'hydrogène gazeux comprend une pluralité de chargements unitaires, les chargements unitaires étant maintenus espacés les uns des autres à l'intérieur de l'enceinte par un bloc de maintien en matériau isolant thermiquement, les chargements s'étendant axialement dans l'enceinte entre le fond avant et le fond arrière de l'enceinte, au moins un chargement unitaire situé à proximité de la paroi latérale étant d'abord initié avant d'initier d'autres chargements unitaires. On réduit ainsi les risques d'une initiation non désirée d'un ou plusieurs chargements unitaires adjacents à un autre chargement volontairement initié. Ces risques peuvent être encore limités en initiant le ou les chargements unitaires adjacents audit au moins un chargement unitaire déjà initié.

### Brève description des dessins

L'invention sera mieux comprise à la lecture de la description faite ci-après, à titre indicatif mais non limitatif, en référence aux dessins annexés sur lesquels :
- la figure 1 est une vue schématique en perspective d'un système de génération d'hydrogène gazeux conformément à un mode de réalisation de l'invention ;
- la figure 2 est une vue en coupe axiale du système de la figure 1 ;
- la figure 3 est une vue éclatée du système de la figure 1 ;
- la figure 4 est une vue de face des chargements unitaires du système de la figure 1 ;
- les figures 5 à 7 sont des vues schématiques respectivement en perspective, en coupe et éclatée d'un chargement unitaire du système de la figure 1 ;
- les figures 8 à 10 sont des vues schématiques respectivement en perspective, en coupe et éclatée d'un chargement unitaire conformément à un autre mode de réalisation de l'invention.

### Description détaillée de modes de réalisation

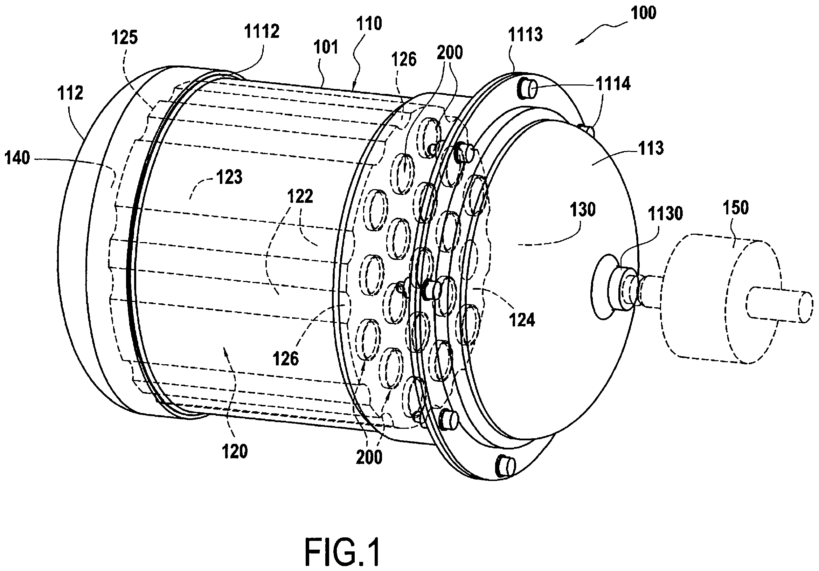

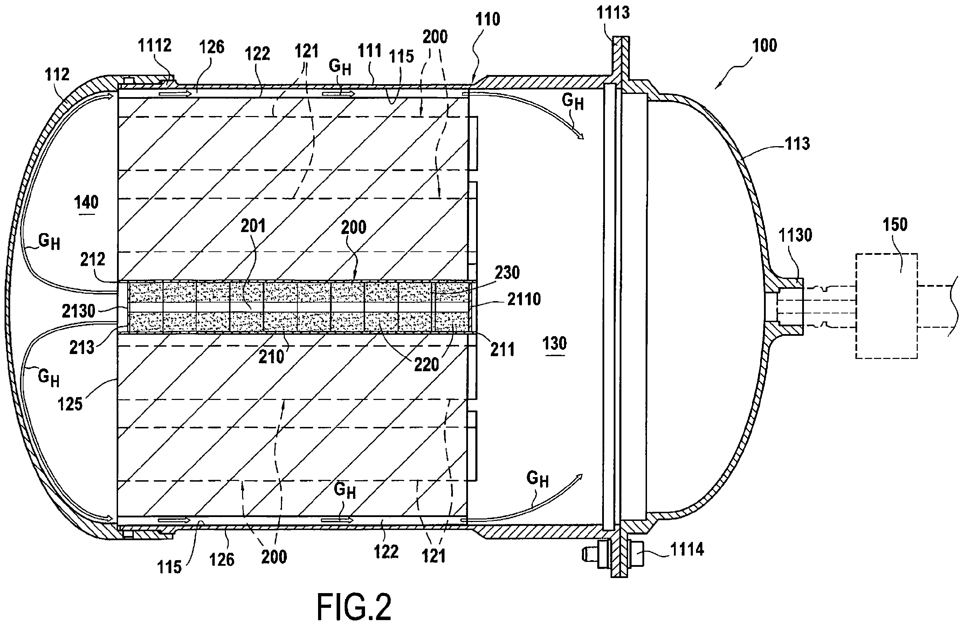

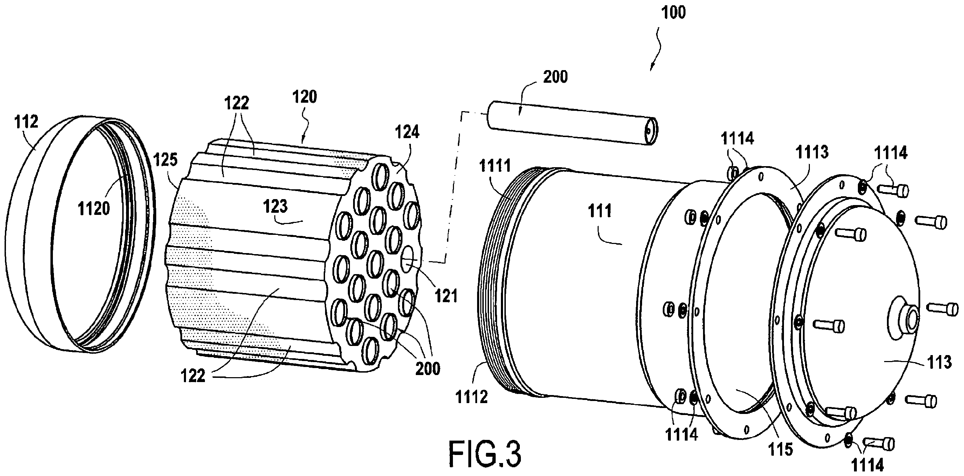

Les figures 1 à 3 montrent un système de production d'hydrogène gazeux 100 comprenant une enceinte 110 formée d'une paroi latérale 111, ici de forme cylindrique, d'un fond avant 112 et d'un fond arrière 113 présentant ici tous les deux une forme de cloche. Le fond avant 112 est fixé sur la paroi latérale au moyen d'un filetage 1120 coopérant avec une portion filetée 1111 présente sur une extrémité avant 1112 de la paroi latérale 111 (figure 2). Le fond arrière 113 est fixé sur l'extrémité arrière 1113 de la paroi 111 au moyen d'organes de fixation 1114 de type vis-écrou.

L'enceinte 110 contient une pluralité de chargements unitaires 200 renfermant chacun un chargement d'au moins un matériau apte à générer de l'hydrogène gazeux sous sollicitation thermique comme par exemple un matériau à base d'ammoniaborane NH₃BH₃. Les chargements unitaires 200 sont disposés axialement dans l'enceinte 110 au niveau de la paroi latérale 111. Les chargements unitaires 200 sont maintenus dans des logements 121 présents dans un bloc de maintien 120 réalisé en un matériau isolant thermiquement. Le bloc 120 présente ici une forme cylindrique et un diamètre correspondant au diamètre interne de la paroi latérale 111.

Le volume 130 délimité entre le fond arrière 113 et l'extrémité arrière 124 du bloc de maintien 120 constitue la capacité d'accumulation d'hydrogène gazeux du système 100 produit par les chargements unitaires 200, l'hydrogène gazeux stocké dans le volume 130 est évacué de l'enceinte 110 par un conduit de sortie 1130 présent sur le fond arrière 113. Le débit d'hydrogène gazeux évacué de l'enceinte 110 est ajusté par un régulateur de débit 150 relié à un ou plusieurs équipements (non représentés) destinés à être alimentés en hydrogène, comme par exemple une pile à combustible.

Le volume 140 délimité entre le fond avant 112 et l'extrémité avant 125 du bloc de maintien 120 constitue un volume collecteur de l'hydrogène gazeux produit par chaque chargement unitaire 200. L'hydrogène gazeux ainsi collecté dans le volume 140 est acheminé vers le volume 130 constituant la capacité d'accumulation d'hydrogène gazeux par un circuit de circulation de gaz s'étendant entre ces deux volumes et comprenant des canaux périphériques 126 formés par des rainures 122 ménagées sur la surface externe 123 du bloc de maintien 120, les rainures 122 étant en regard de la surface interne 115 de la paroi latérale 111. Le trajet des gaz chauds d'hydrogène gazeux depuis leur sortie d'un chargement unitaire 200 jusqu'au volume 140 est matérialisé par des flèches G_{H} sur la figure 2.

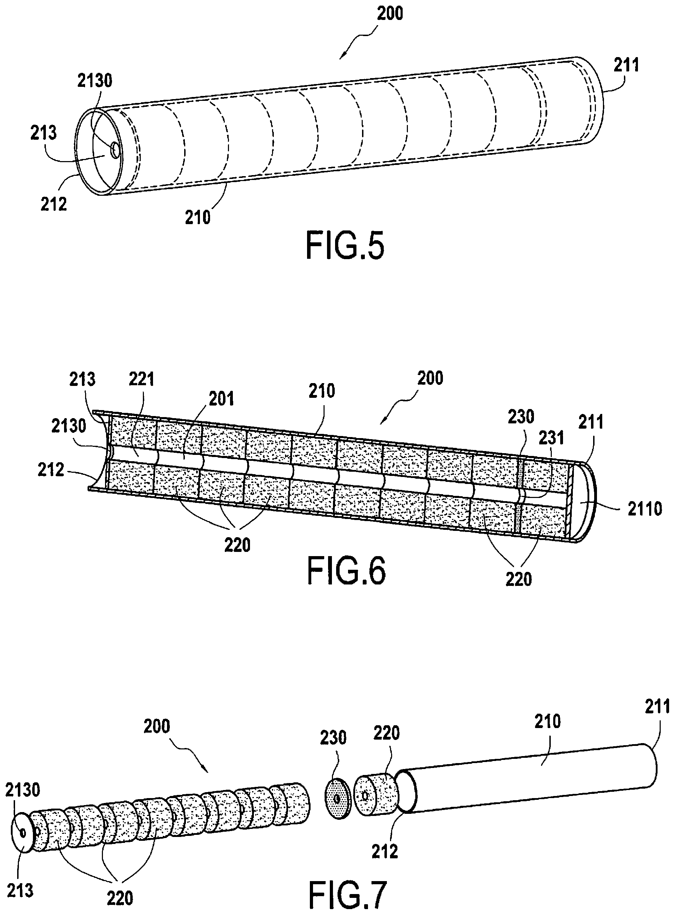

Comme illustré sur les figures 5 à 7, chaque chargement unitaire 200 comprend un corps cylindrique 210, réalisé par exemple en matériau plastique thermostable, comprenant un fond arrière 211 fermé par un couvercle 2110 et un fond avant 212 comportant une ouverture 2130. Dans l'exemple décrit ici, le fond avant 212 comporte un disque de protection thermique 213 dont l'ouverture 2130 constitue l'ouverture du fond avant du corps cylindrique 210. Le chargement unitaire 200 renferme une pluralité de segments annulaires 220 en un matériau apte à générer de l'hydrogène gazeux sous sollicitation thermique. Chaque segment annulaire 220 comporte une ouverture centrale 221. Les segments annulaires 220 sont empilés les uns sur les autres à l'intérieur du corps cylindrique 210 et délimitent entre eux, par la réunion de leurs ouvertures centrales 221, un canal central 201 permettant d'évacuer l'hydrogène gazeux produit par les segments 220.

Chaque chargement unitaire 200 comprend en outre un initiateur 230 relié à un système de commande (non représenté) permettant d'allumer les segments 220 adjacents audit initiateur. L'initiateur 230 est de préférence placé à proximité du fond arrière fermé 211 du corps cylindrique 210 de manière à initier d'abord la décomposition thermique des segments 220 les plus proches du fond fermé du corps cylindrique et d'initier ensuite la décomposition thermique des autres segments en se rapprochant progressivement du fond avant 212 du corps cylindrique 210. Dans l'exemple décrit ici, l'initiateur 230 présente une forme de disque avec une ouverture centrale 231 apte à coopérer avec les ouvertures centrales 221 des segments 220. L'initiateur 230 est ici placé entre les deux segments 220 les plus proches du fond arrière 211 du corps cylindrique 210.

Chaque chargement unitaire peut également renfermer un seul bloc monolithique de matériau apte à générer de l'hydrogène gazeux sous sollicitation thermique, le bloc monolithique présentant une forme et des dimensions correspondant à celles de l'ensemble des segments 220 décrits ci-avant. Dans ce cas, l'initiateur annulaire est d'abord placé contre le fond arrière du corps cylindrique du chargement unitaire avant l'introduction du bloc monolithique de matériau générateur d'hydrogène gazeux dans le corps cylindrique.

Dans le système de production d'hydrogène gazeux de l'invention, la quantité de chaleur portée par les gaz chauds produite par chaque chargement unitaire est rapidement dissipée à l'extérieur de l'enceinte 110. En effet, l'ouverture 2130 du fond avant 212 de chaque chargement unitaire 200, constituant l'unique ouverture d'un chargement unitaire 200 par laquelle les gaz chauds G_{H} issus de la décomposition thermique des segments 220 à l'intérieur du corps cylindrique 210 peuvent être évacués, est placée en regard du fond avant 112 de sorte que les gaz chauds G_{H} sont dirigés directement sur la paroi interne du fond avant 112 et circulent le long de celle-ci avant d'entrer dans les canaux périphériques 122. Ainsi, les gaz chauds G_{H} échangent thermiquement avec le fond avant 112 dès leur entrée dans le volume 140 et sont refroidis par convection externe (figure 2).

En outre, la circulation des gaz chauds G_{H} dans les canaux périphériques 122 vers le volume 130 constituant la capacité d'accumulation d'hydrogène gazeux contribue également à la dissipation de la chaleur portée par ces gaz. En effet, les canaux périphériques étant formés par les espaces présents entre la paroi latérale 111 et les rainures 121 du bloc de maintien 120, les gaz chauds G_{H} échangent thermiquement avec la paroi latérale 111 par convection avec l'extérieur.

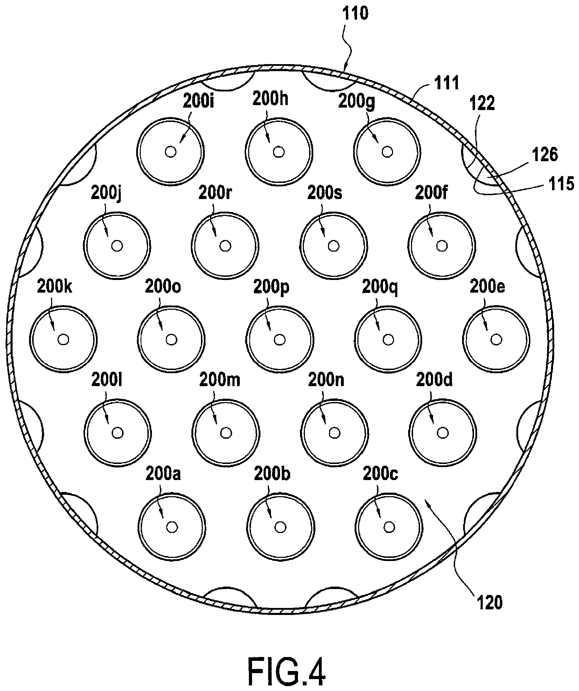

Comme illustré sur la figure 4, les chargements unitaires 200 sont répartis et maintenus espacés les uns des autres à l'intérieur de l'enceinte 110 par le bloc de maintien 120. Les chargements unitaires 200 s'étendant axialement dans l'enceinte 110 au niveau de la paroi latérale 111, c'est-à-dire entre le fond avant 112 et le fond arrière 113 de l'enceinte 110 (figures 1 et 2).

Un système de commande (non représenté) est relié à chaque initiateur des chargements unitaires afin de commander l'allumage séquentiel de ceux-ci. Lorsqu'une production d'hydrogène gazeux par le système 100 est requise, le système de commande initie de préférence d'abord un des chargements unitaires situés à proximité de la paroi latérale 111, à savoir un des chargements unitaires 200a à 200l représentés sur la figure 4. Cela permet de limiter le nombre de chargements unitaires adjacents avec lesquels le chargement unitaire initié pourrait avoir des échanges thermiques et de réduire ainsi le risque d'une initiation non désirée d'un chargement. Ensuite, le système de commande initie de préférence le ou les chargements unitaires adjacents au chargement unitaire déjà initié. Par exemple, si le chargement unitaire 200ç est le premier chargement initié par le système de commande, ce dernier commande ensuite l'initiation des chargements adjacents, à savoir les chargements unitaires 200b, 200n et 200d. En initiant ainsi des chargements unitaires adjacents à un chargement déjà initié, on limite le nombre de chargements unitaires adjacents non encore initiés avec lesquels des échanges thermiques peuvent se produire.

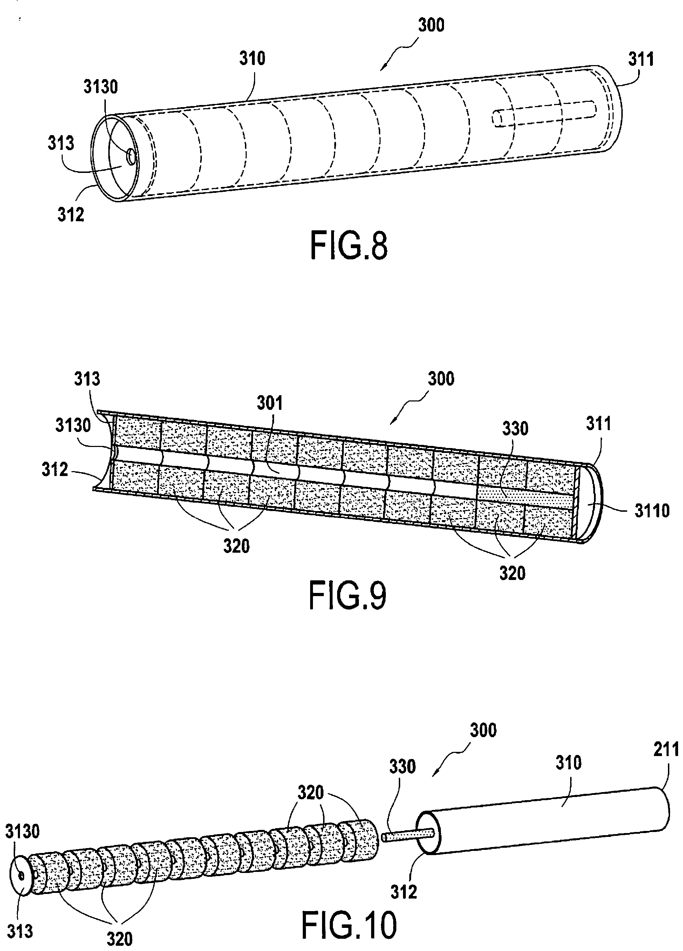

Les figures 8 à 10 illustrent un chargement unitaire 300 selon un autre mode de réalisation de l'invention. De même que pour le chargement 200 décrit précédemment, le chargement unitaire 300 comprend un corps cylindrique 310 comprenant un fond arrière 311 fermé par un couvercle 3110 et un fond avant 312 comportant une ouverture 3130 présente ici dans un disque de protection thermique 313. Le chargement unitaire 300 renferme une pluralité de segments annulaires 320 en un matériau apte à générer de l'hydrogène gazeux sous sollicitation thermique. Chaque segment annulaire 320 comporte une ouverture centrale 321. Les segments annulaires 320 sont empilés les uns sur les autres à l'intérieur du corps cylindrique 310 et délimitent entre eux, par la réunion de leurs ouvertures centrales 321, un canal central 301 permettant d'évacuer l'hydrogène gazeux produit par les segments 320.

Le chargement unitaire 300 comprend en outre un initiateur 300 relié à un système de commande (non représenté) permettant d'allumer les segments 320 adjacents audit initiateur. L'initiateur 330 est de préférence placé à proximité du fond arrière fermé 311 du corps cylindrique 310 de manière à initier d'abord la décomposition thermique des segments 320 proches du fond fermé du corps cylindrique et d'initier ensuite la décomposition thermique des autres segments en se rapprochant progressivement du fond avant 212 du corps cylindrique 210.

Dans l'exemple décrit ici, l'initiateur 330 présente une forme cylindrique ayant des dimensions adaptées pour être logé dans les ouvertures centrales 321 des segments 320. L'initiateur 330 est ici placé dans les ouvertures centrales 321 des deux segments 320 les plus proches du fond arrière 311 du corps cylindrique 310.

## Revendications

1. Système de production d'hydrogène gazeux (100) comprenant une enceinte (110) formée d'une paroi latérale (111), d'un fond avant (112) et d'un fond arrière (113), ladite enceinte refermant un ou plusieurs chargements unitaires (200) d'au moins un matériau apte à générer de l'hydrogène gazeux sous sollicitation thermique, **caractérisé en ce que** chaque chargement unitaire (200) comprend un corps cylindrique (210) comprenant un fond arrière fermé (211) et un fond avant (212) comportant une ouverture (2130), au moins un bloc d'un matériau apte à générer de l'hydrogène gazeux sous sollicitation thermique étant présent à l'intérieur du corps cylindrique (210), chaque bloc présentant une forme annulaire définissant un canal central (201) débouchant au niveau de l'ouverture (2130) du fond avant (212) du corps cylindrique (210) et au moins un initiateur (230) présent au voisinage du fond arrière (211) du corps cylindrique (210), l'ouverture (2130) du fond avant (212) du corps cylindrique (210) étant en regard du fond avant (112) de l'enceinte (110) de sorte que les gaz chauds issus dudit au moins un bloc de matériau apte à générer de l'hydrogène gazeux sous sollicitation thermique sont dirigés directement sur la paroi interne du fond avant (112) de l'enceinte (110).

2. Système selon la revendication 1, **caractérisé en ce que** chaque chargement unitaire (200) comprend une pluralité de segments (220) d'un matériau apte à générer de l'hydrogène gazeux sous sollicitation thermique, chaque segment (220) présentant une forme annulaire avec une ouverture centrale (221), les segments (220) étant empilés les uns sur les autres dans le corps cylindrique (210) de manière à délimiter entre eux un canal central (201) pour l'évacuation de l'hydrogène gazeux.

3. Système selon la revendication 1 ou 2, **caractérisé en ce que** l'ouverture (2130) du fond avant (212) du corps cylindrique (210) de chaque chargement unitaire (200) débouche dans un volume collecteur (140) de l'enceinte qui est apte à échanger thermiquement avec le fond avant (112) de l'enceinte (110).

4. Système selon la revendication 3, **caractérisé en ce qu'**il comprend une capacité d'accumulation d'hydrogène gazeux (130) présente du côté du fond arrière (113) de l'enceinte (110) et **en ce qu'**un circuit de circulation de gaz s'étend entre le volume collecteur (140) et la capacité d'accumulation (130), le circuit de circulation étant apte à échanger thermiquement avec la paroi latérale (111) de l'enceinte (110).

5. Système selon l'une quelconque des revendications 1 à 4, **caractérisé en ce qu'**il comprend une pluralité de chargements unitaires (200), les chargements unitaires étant maintenus espacés les uns des autres dans l'enceinte par bloc de maintien (120) en un matériau isolant thermiquement.

6. Procédé de génération d'hydrogène gazeux dans un système de production d'hydrogène gazeux (100) comprenant une enceinte (110) formée d'une paroi latérale (111), d'un fond avant (112) et d'un fond arrière (113), ladite enceinte refermant un ou plusieurs chargements unitaires (200) d'au moins un matériau apte à générer de l'hydrogène gazeux sous sollicitation thermique, le procédé comprenant l'initiation successive de chaque chargement unitaire (200), **caractérisé en ce que** chaque chargement unitaire (200) comprend un corps cylindrique (210) comprenant un fond arrière fermé (211) et un fond avant (212) comportant une ouverture (2130), au moins un bloc d'un matériau apte à générer de l'hydrogène gazeux sous sollicitation thermique étant présent à l'intérieur du corps cylindrique (210), chaque bloc présentant une forme annulaire définissant un canal central (201) débouchant au niveau de l'ouverture (2130) du fond avant (212) du corps cylindrique (210) et au moins un initiateur (230) présent au voisinage du fond arrière (211) du corps cylindrique (210), l'ouverture (2130) du fond avant (212) du corps cylindrique (210) étant en regard du fond avant (112) de l'enceinte (110) de sorte que les gaz chauds issus dudit au moins un bloc de matériau apte à générer de l'hydrogène gazeux sous sollicitation thermique sont dirigés directement sur la paroi interne du fond avant (112) de l'enceinte (110).

7. Procédé selon la revendication 6, **caractérisé en ce que** chaque chargement comprend une pluralité de segments (220) d'un matériau apte à générer de l'hydrogène gazeux sous sollicitation thermique, chaque segment (220) présentant une forme annulaire avec une ouverture centrale (221), les segments (220) étant empilés les uns sur les autres dans le corps cylindrique de manière à délimiter entre eux un canal central (201) pour l'évacuation de l'hydrogène gazeux.

8. Procédé selon la revendication 6 ou 7, **caractérisé en ce que** l'ouverture (2130) du fond avant (212) du corps cylindrique (210) de chaque chargement unitaire (200) débouche dans un volume collecteur (140) de l'enceinte (110) qui est apte à échanger thermiquement avec le fond avant (112) de l'enceinte (110).

9. Procédé selon la revendication 8, **caractérisé en ce qu'**une capacité d'accumulation d'hydrogène gazeux (130) est présente du côté du fond arrière (113) de l'enceinte et **en ce que** l'hydrogène gazeux produit dans le volume collecteur (140) par les chargements unitaires (200) est acheminé jusqu'à la capacité d'accumulation en échangeant thermiquement avec la paroi latérale (111) de l'enceinte (110).

10. Procédé selon l'une quelconque des revendications 6 à 9, **caractérisé en ce que** le système de production d'hydrogène gazeux (100) comprend une pluralité de chargements unitaires (200), les chargements unitaires étant maintenus espacés les uns des autres à l'intérieur de l'enceinte (110) par un bloc de maintien (120) en matériau isolant thermiquement, les chargements unitaires (200) s'étendant axialement dans l'enceinte entre le fond avant (112) et le fond arrière (113) de l'enceinte (110) et **en ce qu'**au moins un chargement unitaire situé à proximité de la paroi latérale est d'abord initié avant d'initier d'autres chargements unitaires.

11. Procédé selon la revendication 10, **caractérisé en ce qu'**on initie le ou les chargements unitaires adjacents audit au moins un chargement unitaire déjà initié.

## Patentansprüche

1. System zur Erzeugung von Wasserstoffgas (100), umfassend einen Behälter (110), gebildet aus einer Seitenwand (111), einem vorderen Boden (112) und einem hinteren Boden (113), wobei der Behälter eine oder mehrere Ladeeinheiten (200) mindestens eines Materials einschließt, das imstande ist, Wasserstoffgas unter thermischer Beanspruchung zu erzeugen, **dadurch gekennzeichnet, dass** jede Ladeeinheit (200) einen zylindrischen Körper (210) umfasst, der einen geschlossenen hinteren Boden (211) und einen vorderen Boden (212) umfasst, der eine Öffnung (2130) aufweist, wobei mindestens ein Block aus einem Material, das imstande ist, Wasserstoffgas unter thermischer Beanspruchung zu erzeugen, im Inneren des zylindrischen Körpers (210) vorhanden ist, wobei jeder Block eine Ringform aufweist, die einen zentralen Kanal (201) definiert, der im Bereich der Öffnung (2130) des vorderen Bodens (212) des zylindrischen Körpers (210) ausmündet, und mindestens einen Initiator (230), der in der Nähe des hinteren Bodens (211) des zylindrischen Körpers (210) vorhanden ist, wobei die Öffnung (2130) des vorderen Bodens (212) des zylindrischen Körpers (210) dem vorderen Boden (112) des Behälters (110) derart zugewandt ist, dass die warmen Gase aus dem mindestens einen Block aus Material, das imstande ist, Wasserstoffgas unter thermischer Beanspruchung zu erzeugen, direkt über die Innenwand des vorderen Bodens (112) des Behälters (110) geleitet werden.

2. System nach Anspruch 1, **dadurch gekennzeichnet, dass** jede Ladeeinheit (200) eine Vielzahl von Segmenten (220) aus einem Material umfasst, das imstande ist, Wasserstoffgas unter thermischer Beanspruchung zu erzeugen, wobei jedes Segment (220) eine Ringform mit einer zentralen Öffnung (221) aufweist, wobei die Segmente (220) in dem zylindrischen Körper (210) derart übereinander gestapelt sind, dass zwischen ihnen ein zentraler Kanal (201) für die Ableitung des Wasserstoffgases begrenzt wird.

3. System nach Anspruch 1 oder 2, **dadurch gekennzeichnet, dass** die Öffnung (2130) des vorderen Bodens (212) des zylindrischen Körpers (210) jeder Ladeeinheit (200) in ein Sammlervolumen (140) des Behälters ausmündet, das imstande ist, mit dem vorderen Boden (112) des Behälters (110) im thermischen Austausch zu sein.

4. System nach Anspruch 3, **dadurch gekennzeichnet, dass** es eine Wasserstoffgas-Akkumulationskapazität (130) umfasst, die auf der Seite des hinteren Bodens (113) des Behälters (110) vorhanden ist und dass sich ein Gaszirkulationskreis zwischen dem Sammlervolumen (140) und der Akkumulationskapazität (130) erstreckt, wobei der Zirkulationskreis imstande ist, mit der Seitenwand (111) des Behälters (110) im thermischen Austausch zu sein.

5. System nach einem der Ansprüche 1 bis 4, **dadurch gekennzeichnet, dass** es eine Vielzahl von Ladeeinheiten (200) umfasst, wobei die Ladeeinheiten in dem Behälter von einem Halteblock (120) aus einem thermisch isolierenden Material voneinander beabstandet gehalten werden.

6. Verfahren zum Erzeugen von Wasserstoffgas in einem Wasserstoffgasproduktionssystem (100), umfassend einen Behälter (110), gebildet aus einer Seitenwand (111), einem vorderen Boden (112) und einem hinteren Boden (113), wobei der Behälter eine oder mehrere Ladeeinheiten (200) mindestens eines Materials einschließt, das imstande ist, Wasserstoffgas unter thermischer Beanspruchung zu erzeugen, wobei das Verfahren die aufeinanderfolgende Initiierung jeder Ladeeinheit (200) umfasst, **dadurch gekennzeichnet, dass** jede Ladeeinheit (200) einen zylindrischen Körper (210) umfasst, der einen geschlossenen hinteren Boden (211) und einen vorderen Boden (212) umfasst, der eine Öffnung (2130) aufweist, wobei mindestens ein Block aus einem Material, das imstande ist, Wasserstoffgas unter thermischer Beanspruchung zu erzeugen, im Inneren des zylindrischen Körpers (210) vorhanden ist, wobei jeder Block eine Ringform aufweist, die einen zentralen Kanal (201) definiert, der im Bereich der Öffnung (2130) des vorderen Bodens (212) des zylindrischen Körpers (210) ausmündet, und mindestens einen Initiator (230), der in der Nähe des hinteren Bodens (211) des zylindrischen Körpers (210) vorhanden ist, wobei die Öffnung (2130) des vorderen Bodens (212) des zylindrischen Körpers (210) dem vorderen Boden (112) des Behälters (110) derart zugewandt ist, dass die warmen Gase aus dem mindestens einen Block aus Material, das imstande ist, Wasserstoffgas unter thermischer Beanspruchung zu erzeugen, direkt über die Innenwand des vorderen Bodens (112) des Behälters (110) geleitet werden.

7. Verfahren nach Anspruch 6, **dadurch gekennzeichnet, dass** jede Ladeeinheit eine Vielzahl von Segmenten (220) aus einem Material umfasst, das imstande ist, Wasserstoffgas unter thermischer Beanspruchung zu erzeugen, wobei jedes Segment (220) eine Ringform mit einer zentralen Öffnung (221) aufweist, wobei die Segmente (220) in dem zylindrischen Körper derart übereinander gestapelt sind, dass zwischen ihnen ein zentraler Kanal (201) für die Ableitung des Wasserstoffgases begrenzt wird.

8. Verfahren nach Anspruch 6 oder 7, **dadurch gekennzeichnet, dass** die Öffnung (2130) des vorderen Bodens (212) des zylindrischen Körpers (210) jeder Ladeeinheit (200) in ein Sammlervolumen (140) des Behälters (110) ausmündet, das imstande ist, mit dem vorderen Boden (112) des Behälters (110) im thermischen Austausch zu sein.

9. Verfahren nach Anspruch 8, **dadurch gekennzeichnet, dass** es eine Wasserstoffgas-Akkumulationskapazität (130) umfasst, die auf der Seite des hinteren Bodens (113) des Behälters vorhanden ist und dass das in dem Sammlervolumen (140) von den Ladeeinheiten (200) produzierte Wasserstoffgas bis zu der Akkumulationskapazität bei thermischem Austausch mit der Seitenwand (111) des Behälters (110) befördert wird.

10. Verfahren nach einem der Ansprüche 6 bis 9, **dadurch gekennzeichnet, dass** das Wasserstoffgasproduktionssystem (100) eine Vielzahl von Ladeeinheiten (200) umfasst, wobei die Ladeeinheiten in dem Behälter (110) von einem Halteblock (120) aus einem thermisch isolierenden Material voneinander beabstandet gehalten werden, wobei sich die Ladeeinheiten (200) axial in dem Behälter zwischen dem vorderen Boden (112) und dem hinteren Boden (113) des Behälters (110) erstrecken und dass mindestens eine Ladeeinheit, die sich in der Nähe der Seitenwand befindet, zunächst initiiert wird, bevor andere Ladeeinheiten initiiert werden.

11. Verfahren nach Anspruch 10, **dadurch gekennzeichnet, dass** die Ladeeinheite(n) initiiert wird/werden, die zu der mindestens einen bereits initiierten Ladeeinheit benachbart ist/sind.

## Claims

1. A system (100) for producing gaseous hydrogen, the system comprising an enclosure (110) formed by a side wall (111), a front end wall (112), and a rear end wall (113), said enclosure containing one or more unit charges (200) of at least one material suitable for generating gaseous hydrogen when heated, the system being **characterized in that** each unit charge (200) comprises a cylindrical body (210) including a closed rear end wall (211) and a front end wall (212) having an opening (2130), at least one block of material suitable for generating gaseous hydrogen when heated being present inside the cylindrical body (210), each block presenting an annular shape defining a central channel (201) leading to the opening (2130) in the front end wall (212) of the cylindrical body (210) and at least one initiator (230) present in the vicinity of the rear end wall (211) of the cylindrical body (210);
the opening (2130) in the front end wall (212) of the cylindrical body (210) facing the front end wall (112) of the enclosure (110) so that the hot gas coming from said at least one block of material suitable for generating gaseous hydrogen when heated is directed directly against the inside surface of the front end wall (112) of the enclosure (110).

2. A system according to claim 1, **characterized in that** each unit charge (200) has a plurality of segments (220) of a material suitable for generating gaseous hydrogen when heated, each segment (220) being annular in shape with a central opening (221), the segments (220) being stacked on one another in the cylindrical body (210) in such a manner as to define between them a central channel (201) for discharging the gaseous hydrogen.

3. A system according to claim 1 or claim 2, **characterized in that** the opening (2130) in the front end wall (212) of the cylindrical body (210) of each unit charge (200) leads into a collector volume (140) of the enclosure that is suitable for exchanging heat with the front end wall (112) of the enclosure (110).

4. A system according to claim 3, **characterized in that** it includes an accumulation capacity (130) for accumulating gaseous hydrogen that is present beside the rear end wall (113) of the enclosure (110), and **in that** a gas flow circuit extends between the collector volume (140) and the accumulation capacity (130), the flow circuit being suitable for exchanging heat with the side wall (111) of the enclosure (110).

5. A system according to any one of claims 1 to 4, **characterized in that** it includes a plurality of unit charges (200), the unit charges being held spaced apart from one another in the enclosure by a holder block (120) of thermally insulating material.

6. A method of generating gaseous hydrogen in a gaseous hydrogen production system (100) comprising an enclosure (110) formed by a side wall (111), a front end wall (112), and a rear end wall (113), said enclosure containing one or more unit charges (200) of at least one material suitable for generating gaseous hydrogen when heated, the method comprising initiating each unit charge (200) in succession and being **characterized in that** each unit charge (200) comprises a cylindrical body (210) including a closed rear end wall (211) and a front end wall (212) having an opening (2130), at least one block of material suitable for generating gaseous hydrogen when heated being present inside the cylindrical body (210), each block presenting an annular shape defining a central channel (201) leading to the opening (2130) in the front end wall (212) of the cylindrical body (210) and at least one initiator (230) present in the vicinity of the rear end wall (211) of the cylindrical body (210);
the opening (2130) in the front end wall (212) of the cylindrical body (210) facing the front end wall (112) of the enclosure (110) so that the hot gas coming from said at least one block of material suitable for generating gaseous hydrogen when heated is directed directly against the inside surface of the front end wall (112) of the enclosure (110).

7. A method according to claim 6, **characterized in that** each charge has a plurality of segments (220) of a material suitable for generating gaseous hydrogen when heated, each segment (220) being annular in shape with a central opening (221), the segments (220) being stacked on one another in the cylindrical body in such a manner as to define between them a central channel (201) for discharging the gaseous hydrogen.

8. A method according to claim 6 or claim 7, **characterized in that** the opening (2130) in the front end wall (212) of the cylindrical body (210) of each unit charge (200) leads into a collector volume (140) of the enclosure (110) that is suitable for exchanging heat with the front end wall (112) of the enclosure (110).

9. A method according to claim 8, **characterized in that** an accumulation capacity (130) for accumulating gaseous hydrogen is present beside the rear end wall (113) of the enclosure, and **in that** the gaseous hydrogen produced in the collector volume (140) by the unit charges (200) is converged into the accumulation capacity while exchanging heat with the side wall (111) of the enclosure (110).

10. A method according to any one of claims 6 to 9, **characterized in that** the gaseous hydrogen production system (100) has a plurality of unit charges (200), the unit charges being held spaced apart from one another inside the enclosure (110) by a holder block (120) made of thermally insulating material, the unit charges (200) extending axially in the enclosure between the front end wall (112) and the rear end wall (113) of the enclosure (110), and **in that** at least one unit charge situated in the proximity of the side wall is initiated first prior to initiating other unit charges.

11. A method according to claim 10, **characterized in that** any unit charge that is subsequently initiated is adjacent to said at least one unit charge that has already been initiated.
